# EUROPEAN PATENT SPECIFICATION

(11) **EP 1 319 528 B1**
(45) Date of publication and mention of the grant of the patent: **10.05.2006**
(21) Application number: 02027600.2
(22) Date of filing: 10.12.2002
(51) Int. Cl.: B60C 3/06, B60C 9/30, B60C 19/00

(54) **Asymmetric vehicle tire**
Asymmetrischer Fahrzeugreifen
Bandage pneumatique asymétrique pour véhicules

(30) Priority: 11.12.2001 IT TO20011155
(43) Date of publication of application: 18.06.2003
(73) Proprietor: Bridgestone Technical Center Europe S.p.A., 00129 Roma (IT)
(72) Inventor: Leendertse, Jaap Bernard, 60594 Frankfurt Am Main (DE)
(74) Representative: Jorio, Paolo

(56) References cited:
- EP-A- 0 600 398
- US-A- 3 231 000
- US-A- 3 853 164
- US-A- 3 916 968

## Description

The present invention relates to a vehicle tire.

More specifically, the present invention relates to a vehicle tire of the type comprising a toroidal radial carcass having an equatorial plane, a tread, and an annular tread belt interposed between the tread and the carcass and divided by said equatorial plane into an outer annular portion and an inner annular portion; said tread comprising an outer shoulder and an inner shoulder, and having at least a first outer longitudinal groove adjacent to said outer shoulder, and at least a first inner longitudinal groove adjacent to said inner shoulder; and said annular tread belt having a first lateral edge located at said outer shoulder, and a second lateral edge located at said inner shoulder.

The present invention is particularly advantageous in the case of high-performance tires, normally mounted with a positive camber angle, to which the following description refers purely by way of example.

To improve the response of tires of the above type to changes in direction, relatively rigid annular tread belts are used to impart to the tire a relatively high degree of stiffness. Tires of this type, however, when mounted with a positive camber angle, have several drawbacks by deforming poorly. That is, at least when traveling in a straight line, the ground-contact print is relatively small and only covers a portion of the tread width towards an inner shoulder of the tread, thus resulting in relatively severe specific ground pressure and heating, and poor thermal exchange with the ground. The document EP-A-0 600 398 discloses an asymmetric tire in accordance with the preamble of claim 1.

It is an object of the present invention to provide a vehicle tire which is cheap and easy to produce, and which provides for eliminating the aforementioned drawbacks while still responding readily to changes in direction.

According to the present invention, there is provided a heavy-duty tire as claimed in Claim 1 and, preferably, as claimed in anyone of the remaining claims.

The invention will now be described by way of example with reference to the accompanying drawings, in which:
Figure 1 shows a half cross section of a preferred embodiment of the tire according to the present invention;

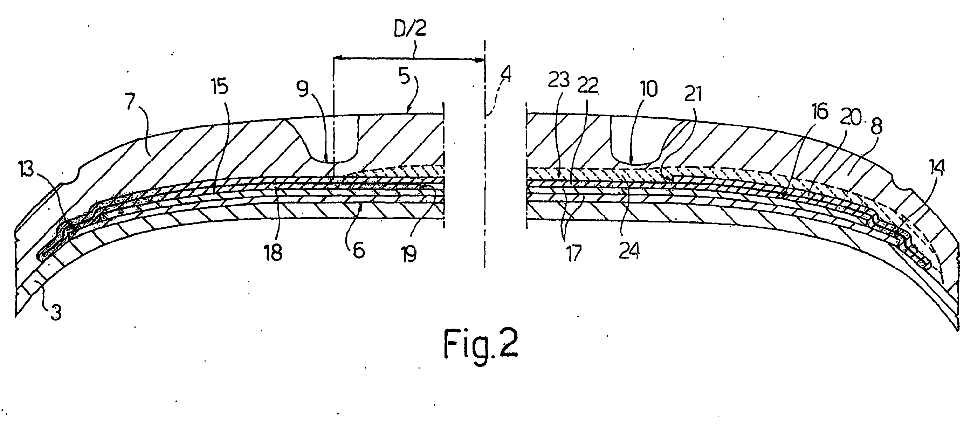

Figure 2 shows a larger-scale view of a detail in Figure 1.

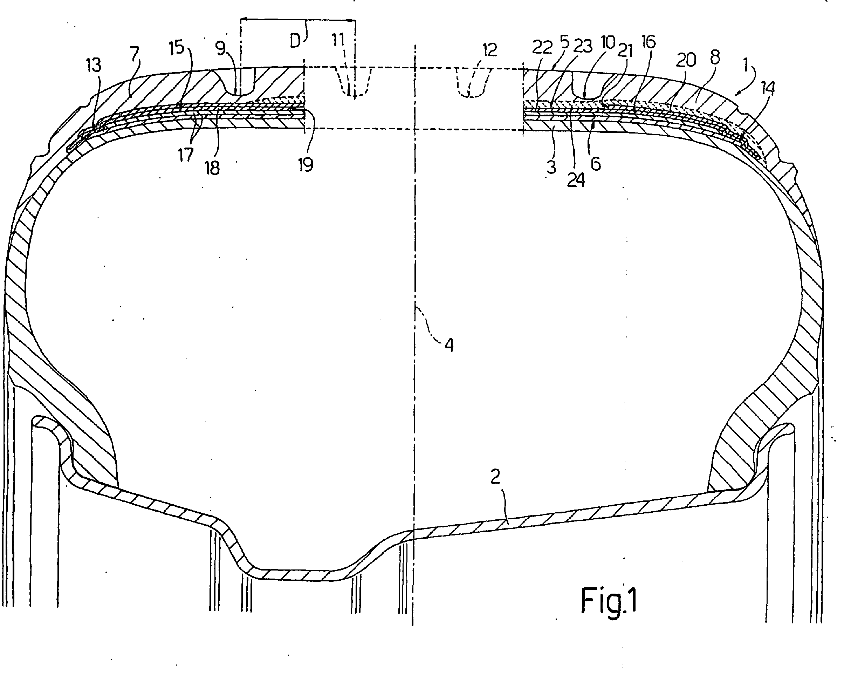

Number 1 in Figure 1 indicates as a whole a vehicle tire, which is shown mounted on a rim 2 and comprises a toroidal radial carcass 3 having an equatorial plane 4 and, externally, a tread 5 and an annular tread belt 6 interposed between tread 5 and carcass 3.

Tread 5 comprises an outer shoulder 7 and inner shoulder 8 defined, towards equatorial plane 4, by respective continuous or discontinuous longitudinal grooves 9 and 10, and has, in the central portion between longitudinal grooves 9 and 10, at least one longitudinal groove 11, also not necessarily continuous, located between equatorial plane 4 and longitudinal groove 9 and at a distance D from longitudinal groove 9, and at least one longitudinal groove 12, also not necessarily continuous, located between equatorial plane 4 and longitudinal groove 10.

Annular tread belt 6 has a first lateral edge 13 at outer shoulder 7, and a second lateral edge 14 at inner shoulder 8; is divided by equatorial plane 4 into an outer annular portion 15 and an inner annular portion 16; and is defined by superimposed tread plies 17, which are two in number in the example shown, but which may, obviously, be more than two.

A reinforcing layer 18 is interposed between outer annular portion 15 and tread 5, and is formed in known manner by winding, on outer annular portion 15 and about an axis (not shown) of tire 1, a continuous strip (not shown) of elastomeric material, preferably of the same type as that constituting the reinforcing material of tread plies 17. Reinforcing layer 18 covers lateral edge 13 of annular tread belt 6, extends towards equatorial plane 4 and beyond longitudinal groove 9, and has, on the side facing equatorial plane 4, an inner lateral edge 19 located between longitudinal grooves 9 and 11 and, preferably, at a distance from longitudinal groove 9 equal to less than half distance D.

A reinforcing layer 20 is interposed between inner annular portion 16 and tread 5, and is formed in known manner by winding, on inner annular portion 16 and about an axis (not shown) of tire 1, a continuous strip (not shown) of elastomeric material, preferably of the same type as that constituting the reinforcing material of tread plies 17. Reinforcing layer 20 covers lateral edge 14 of annular tread belt 6, and has, on the side facing equatorial plane 4, an inner lateral edge 21 located between lateral edge 14 and longitudinal groove 10 and preferably at a distance of at least 5 mm from longitudinal groove 10.

In the case, as in the example shown, of a particularly high-speed tire 1 (over V rating), the transverse peculiarities produced by reinforcing layers 18 and 20 are preferably reduced using a symmetric reinforcing layer 22, which, by covering both lateral edges 13 and 14, covers the whole of annular tread belt 6 and is integral with said first and second layer. More specifically, like reinforcing layers 18 and 20, reinforcing layer 22 is formed by winding a strip (not shown) of elastomeric material about an axis (not shown) of tire 1, and extends radially outwards of reinforcing layer 18 and between annular tread belt 6 and reinforcing layer 20.

Preferably, reinforcing layers 18, 20 and 22 define a single annular reinforcing element 23 having a substantially S-shaped half-section, and are formed using a single strip (not shown) of elastomeric material, which is wound about annular tread belt 6 and the axis (not shown) of tire 1, first leftwards in Figure 1 from inner lateral edge 19 to form reinforcing layer 18, then rightwards in Figure 1 from lateral edge 13 to form reinforcing layer 22, and finally leftwards again in Figure 1 from lateral edge 14 to form reinforcing layer 20.

A heat-conducting base 24 of known composition is interposed between annular reinforcing element 23 - in particular, reinforcing layer 20 - and tread 5, and covers at least the whole of inner annular portion 16 of annular tread belt 6. At most, heat-conducting base 24 may be extended, as in the example shown, to a part of outer annular portion 15 adjacent to equatorial plane 4, but, if so, always terminates short (in the example shown, just short) of longitudinal groove 9.

In tire 1 described above, reinforcing layer 18, which is wider than reinforcing layer 20 and extends beyond longitudinal groove 9, imparts the desired stiffness to outer annular portion 15 of annular tread belt 6, and therefore does not affect the response of tire 1 to changes in direction; while reinforcing layer 20, which is narrower than reinforcing layer 18 and located entirely inwards of longitudinal groove 10, increases the deformability of inner annular portion 16 as compared with that of outer annular portion 15, thus increasing the ground print area when traveling in a straight line, improving heat exchange with the ground, and reducing weight.

## Claims

1. A vehicle tire comprising a toroidal radial carcass (3) having an equatorial plane (4), a tread (5), and an annular tread belt (6) interposed between the tread (5) and the carcass (3) and divided by said equatorial plane (4) into an outer annular portion (15) and an inner annular portion (16); said tread (5) comprising an outer shoulder (7) and an inner shoulder (8), and having at least a first outer longitudinal groove (9) adjacent to said outer shoulder (7), and at least a first inner longitudinal groove (10) adjacent to said inner shoulder (8); and said annular tread belt (6) having a first lateral edge (13) located at said outer shoulder (7), and a second lateral edge (14) located at said inner shoulder (8); said tire (1) also comprising asymmetric reinforcing means (18, 20, 22) interposed between said tread (5) and said annular tread belt (6) to impart to said outer annular portion (15) a degree of stiffness greater than that of said inner annular portion (16); said reinforcing means (18, 20, 22) comprising a first reinforcing layer (18) for reinforcing said outer annular portion (15), and a second reinforcing layer (20) for reinforcing said inner annular portion (16); said first reinforcing layer (18) extending from said first lateral edge (13) towards the equatorial plane (4) and beyond said first outer longitudinal groove (9); said tire being **characterized by** said second reinforcing layer (20) extending from said second lateral edge (14) towards the equatorial plane (4), and terminating short of said first inner longitudinal groove (10).

2. A tire as claimed in Claim 1, wherein said first reinforcing layer (18) covers said first lateral edge (13).

3. A tire as claimed in Claim 1 or 2, wherein said second reinforcing layer (20) covers said second lateral edge (14).

4. A tire as claimed in one of the foregoing Claims, wherein said tread (5) comprises at least a second outer longitudinal groove (11) adjacent to said first outer longitudinal groove (9), interposed between said first outer longitudinal groove (9) and said equatorial plane (4), and located a given distance (D) from the first outer longitudinal groove (9); said first reinforcing layer (18) terminating short of half said given distance (D).

5. A tire as claimed in one of the foregoing Claims, wherein said second reinforcing layer (20) terminates at least 5 mm inwards of said first inner longitudinal groove (10).

6. A tire as claimed in one the foregoing Claims, wherein said reinforcing means (18, 20, 22) comprise a third reinforcing layer (22) integral with said first and said second reinforcing layer (18, 20).

7. A tire as claimed in Claim 6, wherein said third reinforcing layer (22) covers both said lateral edges (13, 14).

8. A tire as claimed in one of the foregoing Claims, wherein said reinforcing means (18; 20; 22) are defined by a strip of elastomeric material wound about said annular tread belt (6).

9. A tire as claimed in one of Claims 6 to 8, wherein said third reinforcing layer (22) extends radially outwards of said first reinforcing layer (18) and between the annular tread belt (6) and said second reinforcing layer (20), so as to form, with said first and said second reinforcing layer (18, 20), a single annular reinforcing element (23).

10. A tire as claimed in Claim 9, wherein said annular reinforcing element (23) has a substantially S-shaped half-section.

11. A tire as claimed in Claim 9 or 10, wherein said annular reinforcing element (23) is defined by a single wound strip of elastomeric material.

12. A tire as claimed in one of the foregoing Claims, wherein an asymmetric heat-conducting base (24) is interposed between said reinforcing means (18, 20, 22) and the tread (5) to ensure greater heat conduction on the side of said inner annular portion (16).

13. A tire as claimed in Claim 12, wherein said heat-conducting base (24) covers the whole of said inner annular portion (16).

14. A tire as claimed in Claim 13, wherein said heat-conducting base (24) also covers a part of said outer annular portion (15) adjacent to said equatorial plane (4).

15. A tire as claimed in Claim 14, wherein said heat-conducting base (24) terminates just short of said first outer longitudinal groove (9).

## Patentansprüche

1. Ein Fahrzeugreifen, umfassend eine ringförmige radiale Karkasse (3) mit einer äquatorialen Ebene (4), eine Lauffläche (5) und einen ringförmigen Laufflächengurt (6), welcher zwischen der Lauffläche (5) und der Karkasse (3) angeordnet ist und welcher durch die äquatoriale Ebene (4) in einen äußeren ringförmigen Abschnitt (15) und einen inneren ringförmigen Abschnitt (16) unterteilt ist; wobei die Lauffläche (5) eine äußere Schulter (7) und eine innere Schulter (8) umfasst und mindestens eine erste äußere Längsnut (9) benachbart zu der äußeren Schulter (7) und mindestens eine erste innere Längsnut (10) benachbart zu der inneren Schulter (8) aufweist; und wobei der ringförmige Laufflächengurt (6) einen an der äußeren Schulter (7) angeordneten ersten seitlichen Rand (13) und einen an der inneren Schulter (8) angeordneten zweiten seitlichen Rand (14) aufweist; wobei der Reifen (1) ferner asymmetrische Verstärkungsmittel (18, 20, 22) umfasst, welche zwischen der Lauffläche (5) und dem ringförmigen Laufflächengürtel (6) angeordnet sind, um dem äußeren ringförmigen Abschnitt (15) einen größeren Grad an Steifheit als dem inneren ringförmigen Abschnitt (16) zu verleihen; wobei die Verstärkungsmittel (18, 20, 22) eine erste Verstärkungsschicht (18) zum Verstärken des äußeren ringförmigen Abschnitts (15) und eine zweite Verstärkungsschicht (20) zum Verstärken des inneren ringförmigen Abschnitts (16) umfassen; wobei sich die erste Verstärkungsschicht (18) von dem ersten seitlichen Rand (13) in Richtung der äquatorialen Ebene (4) und über die erste äußere Längsnut (9) hinaus erstreckt;
wobei der Reifen **dadurch gekennzeichnet ist, dass** sich die zweite Verstärkungsschicht (20) von dem zweiten seitlichen Rand (14) in Richtung der äquatorialen Ebene (4) erstreckt und kurz vor der ersten inneren Längsnut (10) endet.

2. Reifen nach Anspruch 1, wobei die erste Verstärkungsschicht (18) den ersten seitlichen Rand (13) bedeckt.

3. Reifen nach Anspruch 1 oder 2, wobei die zweite Verstärkungsschicht (20) den zweiten seitlichen Rand (14) bedeckt.

4. Reifen nach einem der vorhergehenden Ansprüche, wobei die Lauffläche (5) mindestens eine zweite äußere Längsnut (11) benachbart zu der ersten äußeren Längsnut (9) umfasst, welche zwischen der ersten äußeren Längsnut (9) und der äquatorialen Ebene (4) liegt und welche in einem vorgegebenen Abstand (D) zu der ersten äußeren Längsnut (8) angeordnet ist; wobei die erste Verstärkungsschicht (18) kurz vor der Hälfte des vorgegebenen Abstands (D) endet.

5. Reifen nach einem der vorhergehenden Ansprüche, wobei die zweite Verstärkungsschicht (20) mindestens 5 mm innen von der ersten inneren Längsnut (10) endet.

6. Reifen nach einem der vorhergehenden Ansprüche, wobei die Verstärkungsmittel (18, 20, 22) eine dritte Verstärkungsschicht (22) umfassen, welche in die erste und zweite Verstärkungsschicht (18, 20) integriert ist.

7. Reifen nach Anspruch 6, wobei die dritte Verstärkungsschicht (22) die beiden seitlichen Ränder (13, 14) überdeckt.

8. Reifen nach einem der vorhergehenden Ansprüche, wobei die Verstärkungsmittel (18, 20, 22) durch einen Streifen elastomeren Materials, welcher um den ringförmigen Laufflächengürtel (6) gewickelt ist, definiert sind.

9. Reifen nach einem der Ansprüche 6 bis 8, wobei sich die dritte Verstärkungsschicht (22) radial nach außen von der ersten Verstärkungsschicht (18) und zwischen dem ringförmigen Laufflächengürtel (6) und der zweiten Verstärkungsschicht (20) erstreckt, um so mit der ersten und zweiten Verstärkungsschicht (18, 20) ein einzelnes ringförmiges Verstärkungselement (23) auszubilden.

10. Reifen nach Anspruch 9, wobei das ringförmige Verstärkungselement (23) einen im Wesentlichen S-förmigen Halbschnitt aufweist.

11. Reifen nach Anspruch 9 oder 10, wobei das ringförmige Verstärkungselement (23) durch einen einzelnen gewickelten Streifen elastomeren Materials definiert ist.

12. Reifen nach einem der vorhergehenden Ansprüche, wobei eine asymmetrische wärmeleitende Basis (24) zwischen den Verstärkungsmitteln (18, 20, 22) und der Lauffläche (5) angeordnet ist, um eine größere Wärmeleitung an der Seite des inneren ringförmigen Abschnitts (16) zu gewährleisten.

13. Reifen nach Anspruch 12, wobei die wärmeleitende Basis (24) den gesamten inneren ringförmigen Abschnitt (16) bedeckt.

14. Reifen nach Anspruch 13, wobei die wärmeleitende Basis (24) ferner einen Anteil des an die äquatoriale Ebene (4) angrenzenden äußeren ringförmigen Abschnitts (15) bedeckt.

15. Reifen nach Anspruch 14, wobei die wärmeleitende Basis (24) kurz vor der ersten äußeren Längsnut (9) endet.

## Revendications

1. Bandage pneumatique pour véhicule, comprenant une carcasse radiale toroïdale (3) comportant un plan équatorial (4), une bande de roulement (5) et une ceinture de bande de roulement annulaire (6) interposée entre la bande de roulement (5) et la carcasse (3) et divisée par ledit plan équatorial (4) en une partie annulaire extérieure (15) et une partie annulaire intérieure (16) ; ladite bande de roulement (5) comportant un épaulement extérieur (7) et un épaulement intérieur (8) et possédant au moins une première rainure longitudinale extérieure (9) à proximité dudit épaulement extérieur (7) et au moins une première rainure longitudinale intérieure (10) à proximité dudit épaulement intérieur (8) ; et ladite ceinture de bande de roulement annulaire (6) présentant un premier bord latéral (13) situé au niveau dudit épaulement extérieur (7), et un deuxième bord latéral (14) situé au niveau dudit épaulement intérieur (8) ; ledit bandage pneumatique (1) comprenant en outre des moyens de renforcement asymétriques (18, 20, 22) interposés entre ladite bande de roulement (5) et ladite ceinture de bande de roulement annulaire (6) afin de conférer à ladite partie annulaire extérieure (15) un degré de rigidité supérieur à celui de ladite partie annulaire intérieure (16) ; lesdits moyens de renforcement (18, 20, 22) comprenant une première couche de renforcement (18) pour renforcer ladite partie annulaire extérieure (15), et une deuxième couche de renforcement (20) pour renforcer ladite partie annulaire intérieure (16) ; ladite première couche de renforcement (18) s'étendant à partir dudit premier bord latéral (13) en direction du plan équatorial (4) et au-delà de ladite première rainure longitudinale extérieure (9) ; ledit bandage pneumatique étant **caractérisé en ce que** ladite deuxième couche de renforcement (20) s'étend à partir dudit deuxième bord latéral (14) en direction du plan équatorial (4) et se termine tout près de ladite première rainure longitudinale intérieure (10).

2. Bandage pneumatique selon la revendication 1, dans lequel ladite première couche de renforcement (18) recouvre ledit premier bord latéral (13).

3. Bandage pneumatique selon la revendication 1 ou 2, dans lequel ladite deuxième couche de renforcement (20) recouvre ledit deuxième bord latéral (14).

4. Bandage pneumatique selon l'une des revendications précédentes, dans lequel ladite bande de roulement (5) comporte au moins une deuxième rainure longitudinale extérieure (11) à proximité de ladite première rainure longitudinale extérieure (9), interposée entre ladite première rainure longitudinale extérieure (9) et ledit plan équatorial (4), et située à une distance donnée (D) de la première rainure longitudinale extérieure (9) ; ladite première couche de renforcement (18) se terminant tout près de la moitié de ladite distance donnée (D).

5. Bandage pneumatique selon l'une des revendications précédentes, dans lequel ladite deuxième couche de renforcement (20) se termine au moins à 5 mm vers l'intérieur de ladite première rainure longitudinale intérieure (10).

6. Bandage pneumatique selon l'une des revendications précédentes, dans lequel lesdits moyens de renforcement (18, 20, 22) comprennent une troisième couche de renforcement (22) intégrée auxdites première et deuxième couches de renforcement (18, 20).

7. Bandage pneumatique selon la revendication 6, dans lequel ladite troisième couche de renforcement (22) recouvre lesdits deux bords latéraux (13, 14).

8. Bandage pneumatique selon l'une des revendications précédentes, dans lequel lesdits moyens de renforcement (18 ; 20 ; 22) sont définis par une bande de matière élastomère enroulée autour de ladite ceinture de bande de roulement annulaire (6).

9. Bandage pneumatique selon l'une des revendications 6 à 8, dans lequel ladite troisième couche de renforcement (22) s'étend radialement vers l'extérieur de ladite première couche de renforcement (18) et entre la ceinture de bande de roulement annulaire (6) et ladite deuxième couche de renforcement (20) de manière à former, avec lesdites première et deuxième couches de renforcement (18, 20), un seul élément de renforcement annulaire (23).

10. Bandage pneumatique selon la revendication 9, dans lequel ledit élément de renforcement annulaire (23) présente une demi-section sensiblement en forme de S.

11. Bandage pneumatique selon la revendication 9 ou 10, dans lequel ledit élément de renforcement annulaire (23) est défini par une seule bande de matière élastomère enroulée.

12. Bandage pneumatique selon l'une des revendications précédentes, dans lequel une base conductrice de chaleur asymétrique (24) est interposée entre lesdits moyens de renforcement (18, 20, 22) et la bande de roulement (5) dans le but d'assurer une plus grande conductivité thermique sur le côté de ladite partie annulaire intérieure (16).

13. Bandage pneumatique selon la revendication 12, dans lequel ladite base conductrice de chaleur (24) recouvre la totalité de ladite partie annulaire intérieure (16).

14. Bandage pneumatique selon la revendication 13, dans lequel ladite base conductrice de chaleur (24) recouvre également une partie de ladite partie annulaire extérieure (15) à proximité dudit plan équatorial (4).

15. Bandage pneumatique selon la revendication 14, dans lequel ladite base conductrice de chaleur (24) se termine juste tout près de ladite première rainure longitudinale extérieure (9).
